# EUROPEAN PATENT APPLICATION

(11) **EP 1 734 744 A2**
(43) Date of publication of application: **20.12.2006**
(21) Application number: 06012410.4
(22) Date of filing: 16.06.2006
(51) Int. Cl.: H04N 5/225

(54) **Camera lens assembly for portable terminals**

(30) Priority: 15.06.2005 KR 20050051401
(71) Applicant: Samsung Electronics Co., Ltd., Yeongtong-gu Suwon-si, Gyeonggi-do (KR)
(72) Inventor: Shin, Doo-Sik, Yeongtong-gu Suwon-si Gyeonggi-do (KR); Kang, Byung-Kwon, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a camera lens assembly for a portable terminal. The camera lens assembly includes a guide plate having an image sensor on a surface thereof; a driving motor which is placed on the other surface of the guide plate; and a driving shaft which extends along an optical axis of the image sensor from the other surface of the guide plate, wherein the driving shaft moves along the optical axis of the image sensor thereby enabling the guide plate and the image sensor move forwards or backwards along the optical axis to control focus when the driving motor operates.

## Description

### BACKGROUND OF THE INVENTION

### 1. Field of the Invention

The present invention relates to a camera lens assembly for use with a portable terminal.

### 2. Description of the Related Art

In general, a portable terminal refers to a communication device, which provides an electronic communication function for a user to communicate with another user or a service provider wirelessly. The user can carry the portable terminal with him/her while using various services such as a voice communication service, short message sending service, multimedia service, entertainment service and the like.

Conventional portable terminals may be classified into various types according to their appearance. For example, (1) a bar-type portable terminal, which has a transmitter, a receiver and data input/output unit; (2) a flip-type portable terminal, which has a transmitter, a receiver and data input/output unit installed on a housing similar to the bar-type portable terminal and of which the data input/output unit, such as a keypad, is opened and closed by means of a flip panel; and (3) a folder-type portable terminal, which has a pair of housings that includes a transmitter, a receiver and data input/output unit separately disposed therein and one of which can be folded towards the other. Recently, a sliding-type portable terminal, a pop up-type portable terminal, a swing-type portable terminal and the like have been manufactured and commercially available to satisfy various consumer demands. The various classifications of portable terminals are easily understood by those skilled in the art.

Mobile communication services using the portable terminals are departing from basic communication services, such as voice communication and short message sending service. Mobile communication services are heading toward various services including data transmitting service, game content, E-mail transferring service, image communication service, and mobile banking service. Thus, the portable terminals not only have the basic communication functions but also have been reinforced with security and multimedia functions.

Within portable terminals, functions such as a small camera module mounted to the portable terminals, photographing function, image communicating function and the like, are becoming established as general functions of the portable terminals. As it becomes common to mount a camera module to the portable terminal, manufacturers of the portable terminals now compete with another in producing the portable terminals containing a highly-efficient camera module. However, tendency to smaller and lighter portable terminals restrains the improvement of the camera itself. That is, it is necessary to produce the highly-efficient camera as well as to mount a unit for controlling an optical zoom and focus and a unit for compensating for hand tremble to the portable terminals in order to improve the efficiency of the camera. However, the difficult is to obtain space to mount such units to small and light portable terminals that are currently common.

### SUMMARY OF THE INVENTION

Accordingly, the present invention has been made to reduce or overcome the above-mentioned problems occurring in the prior art. One illustrative object of the present invention is to provide a camera lens assembly, which is smaller in size and for use with a portable terminal, has controllable focus and an optical zoom function.

Another illustrative object of the present invention is to provide a camera lens assembly capable of photographing a certain subject in various directions with the portable terminal in a fixed position.

In one embodiment, there is provided a camera lens assembly for a portable terminal, which includes a guide plate having an image sensor on a surface thereof; a driving motor which is placed on the other surface of the guide plate; and a driving shaft which extends along an optical axis of the image sensor from the other surface of the guide plate, wherein the driving shaft moves along the optical axis of the image sensor thereby enabling the guide plate and the image sensor move forwards or backwards along the optical axis to control focus when the driving motor operates.

### BRIEF DESCRIPTION OF THE DRAWINGS

The present invention will be more apparent from the following detailed description taken in conjunction with the accompanying drawings, in which:
FIG 1 is a schematic view showing a portable terminal including a camera lens assembly according to an embodiment of the present invention;
FIG 2 is a schematic view showing a camera lens assembly for the portable terminal according to the embodiment of the present invention shown in FIG 1;
FIG 3 is an exploded perspective view showing the camera lens assembly for the portable terminal according to the embodiment of the present invention shown in FIG 1;
FIG 4 is a perspective view showing the driving motor of the camera lens assembly for the portable terminal according to the embodiment of the present invention shown in FIG 2; and
FIG 5 is a sectional view showing the driving motor of the camera lens assembly for the portable terminal according to the embodiment of the present invention shown in FIG 3.

### DETAILED DESCRIPTION

Hereinafter, an embodiment of the present invention will be described with reference to the accompanying drawings. For the purposes of clarity and simplicity, a detailed description of known functions and configurations incorporated herein is omitted to avoid making the subject matter of the present invention unclear.

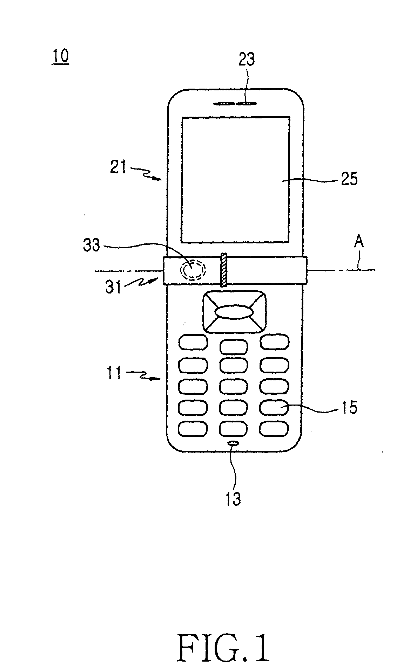

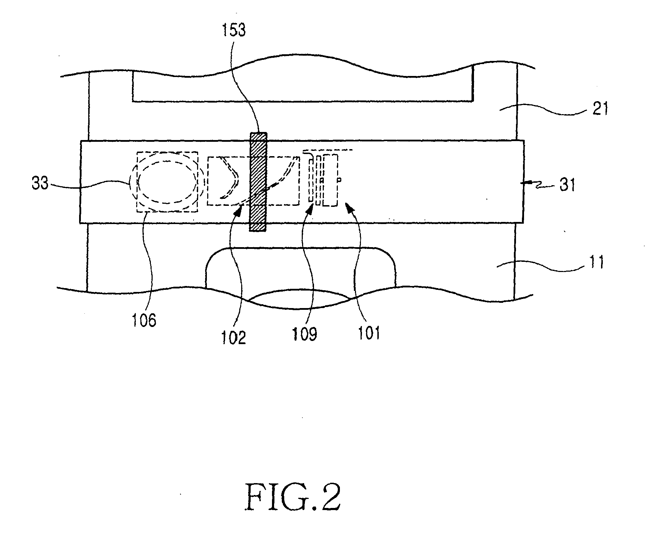

As shown in FIGS. 1 and 2, the portable terminal 10 having a camera lens assembly 100 according to the preferred embodiment of the present invention is a folder-type portable terminal. The portable terminal 10 includes a first housing 11 and a second housing 21 coupled (e.g. hingedly assembled) with each other.

The first housing 11 includes a transmitter unit 13 containing a microphone and a keypad 15. The second housing 21 has a receiver unit 23 containing a speakerphone and a display unit 25. The first housing 11 is connected to the second housing 21 in such a manner that an upper end of the first housing 11 is coupled (e.g. hingedly) to a lower end of the second housing 21, thus, for example, forming a hinge axis A extending therethrough. As the second housing 21 rotates around the hinge axis A, the transmitter unit 13, the keypad 15, the receiver unit 23 and the display unit 25 can be open and closed.

The camera lens assembly 100 is disposed on a hinge assembling portion 31 of the portable terminal 10, specifically on the hinge axis A. In the embodiment of the present invention, the camera lens assembly 100 is illustrated as being disposed on the hinge axis A of the folder-type portable terminal. However, if the structural elements of the camera lens assembly 100 described hereinafter are sequentially arranged along the optical axis of the image sensor 191, the camera lens assembly 100 can be applied to any type of portable terminal.

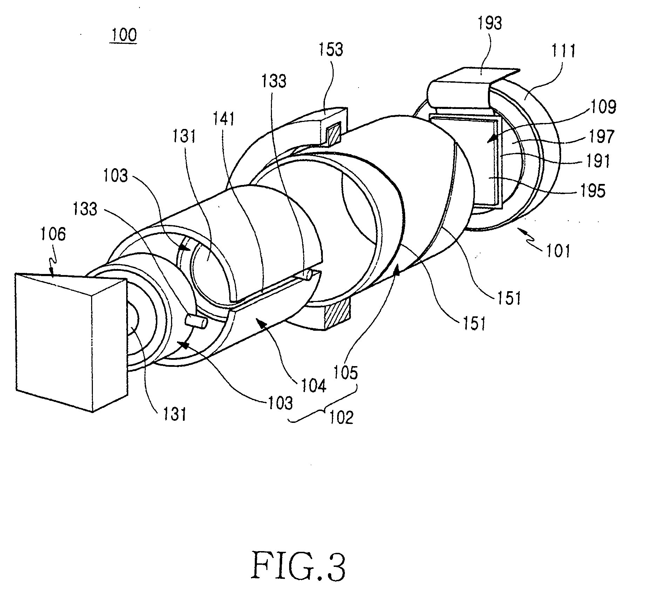

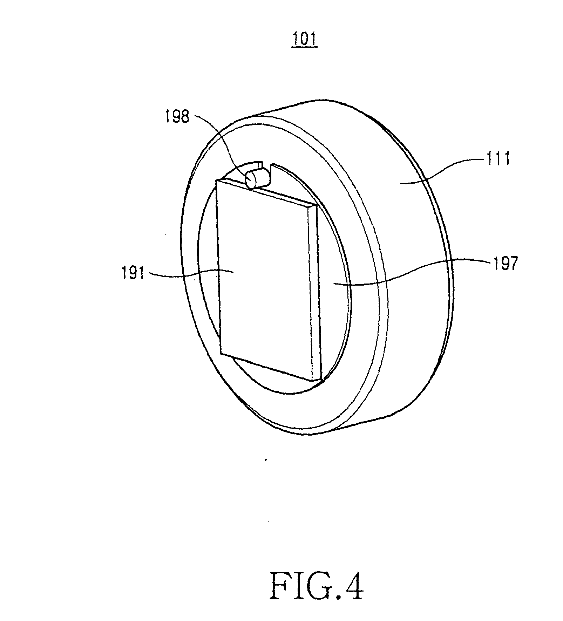

Referring to FIGS. 2 to 5, the camera lens assembly 100 includes a driving motor 101 having an image sensor 191, a lens assembly 102, and a prism 106. The driving motor 101 helps the camera lens assembly 100 to focus. The lens assembly 102 performs an optical zoom function, such as a zoom-in function and a zoom-out function. The prism 106 enables a user to photograph a subject in various directions.

Elements which detect and transform an image for the subject into electric signals include a Charged Coupled Device (CCD) and a Complementary Metal-Oxide Semiconductor (CMOS). These devices are mainly used for the image sensor 191. The image relating to the subject is introduced through an ultraviolet filter 195 into the image sensor 191. That is, the ultraviolet filter 195 is attached to an image making surface of the image sensor 191. The image relating to the subject is detected and transformed into the electric signals. This is by means of the image sensor 191 that is transferred through a flexible printed circuit 193 to a central processing unit of the portable terminal 10. The flexible printed circuit 193 is disposed between the image sensor 191 and the ultraviolet filter 195. The flexible printed circuit 193 has an opening through which the image for the subject is introduced into the image sensor 191.

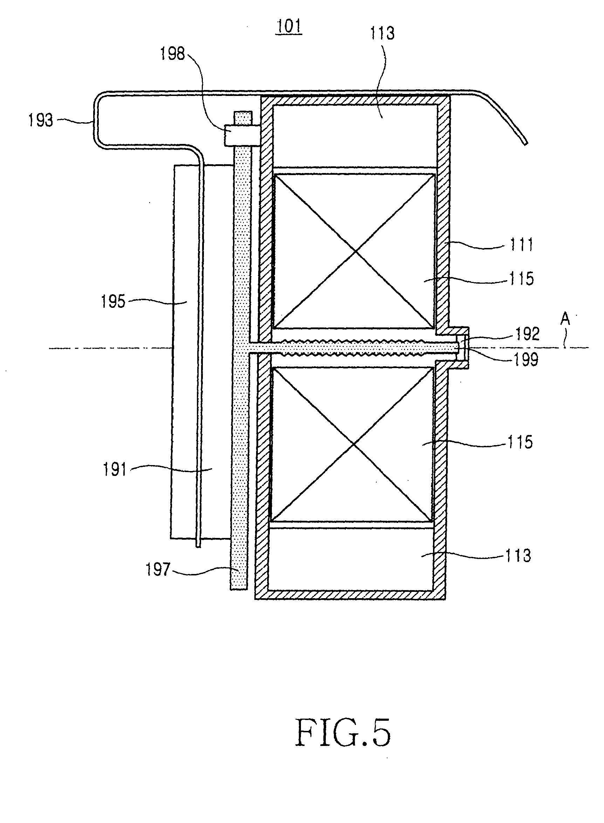

Referring to FIG 5, the driving motor 101 includes a housing 111, a stator 113 having coils in the housing 111, and a rotor 115 made of permanent magnets to enclose the stator 113. The rotor 115 rotates in a forward or reverse direction in the housing 111 according to the signal current applied to the stator 113.

The driving motor 101 has a guide plate 197 attached thereto. The image sensor 191 is attached to a surface of the guide plate 197, while a driving shaft 199 extends along an optical axis of the image sensor 191 out of the other surface of the image sensor 191. The driving shaft 199 extends through the center of the rotor 115, which, in tum, is screwed to the rotor 115. A guide shaft 198 extends in parallel to the optical axis of the image sensor 191 from one surface of the housing 111 so as to penetrate the guide plate 197. As the guide shaft 198 extends through the guide plate 197, the guide plate 197 and the driving shaft 199 are restrained from rotating against the driving motor 101. When the rotor 115 rotates, the driving shaft 199 moves straight along the optical axis of the image sensor 191 to enable the guide plate 197 and the image sensor 191 move forward or backward along the optical axis of the image sensor 191.

In other words, a rotation movement of the rotor 115 is transformed into a straight movement of the driving motor 101, resulting in the movement of the image sensor 191. At this time, a movement range of the image sensor 191 is determined by revolutions of the rotor 115 and a pitch of a screw thread formed on the driving shaft 199. The movement of the image sensor 191 causes a focus to be controlled.

The movement range of the image sensor 191 is calculated by an auto-focus controlling algorithm. The auto-focus controlling algorithm detects clearness of the image for the subject, which is photographed on the image sensor 191. As a result, signal current that determines the revolutions of the rotor 115 is applied to the stator 113. The rotor 115 rotates in the forward or reverse direction according to the signal current applied to the stator 113. This in turn enables the driving shaft 199, the guide plate 197 and the image sensor 191 to move forward or backward to control a focal distance.

On the other hand, a contact sensor 192 is disposed on a back surface of the housing 111. The contact sensor 192 is used for setting up an initial position of the driving shaft 199. When the camera is not used, an end of the driving shaft 199 moves to a position at which the end of the driving shaft 199 comes into contact with the contact sensor 192. The position at which the driving shaft 199 comes in contact with the contact sensor 192 is set up at the initial point during the focus is performed.

A person skilled in the art will understand that the auto-focus controlling algorithm can be applied to a photographing device such a digital camera in various formations.

The driving motor 101 for controlling the focal distance is disposed at the rear of the image sensor 191 to be in the optical axis of the image sensor 191. The camera lens assembly 100 has an increased length and a narrow width. Further, it is possible to make the optical axis of the image sensor 191 coincide with the hinge axis of the portable terminal 10. Consequently, the camera lens assembly 100 can be mounted in a space obtained in the hinge assembling portion 31 of the portable terminal 10. The focal distance controlling unit according to the conventional art has a structure such that movers are arranged on an outer periphery of the image sensor in order for a stator to enclose the movers. Thus, the image sensor has an inevitably increased width. Furthermore, since the focal distance controlling unit makes the image sensor move straight forwards or backwards in order to control the focal distance, there is a limitation to a decrement of the length of the controlling unit in the direction of the focal distance. Accordingly, the focal distance controlling unit according to the conventional art has length and width limitations thereof. Therefore, there is a necessity to obtain a space which has considerable length and width in order to mount the camera lens assembly including the conventional focal distance controlling unit in the portable terminal. Therefore, this is an obstacle to the miniaturization of the portable terminal.

On the other hand, the focal distance controlling unit of the camera lens assembly 100 according to the embodiment of the present invention is disposed in a direction of the optical axis of the image sensor 191. Thus, it has an increased length but a decreased width. Since the camera lens assembly 100 has the increased length, enough to be received in the hinge assembling portion 31 of the portable terminal 10, the focal distance controlling unit of the camera lens assembly 100 can be mounted in the portable terminal without a substantially increased size of the portable terminal.

The general camera lens assembly that is mounted to the portable terminal only has digital zoom function in that the photographed image is enlarged and cropped by software. This is because of the lack of an optical zoom function due to miniaturization limitations of the portable terminal. On the other hand, the camera lens assembly 100 according to the embodiment of the present invention has a lens assembly 102 in the optical axis of the image sensor 191 that provides an optical zoom function.

The lens assembly 102 includes a lens housing 103, which has at least one lens 131, a first guide housing 104 that receives the lens housing 103 and a second guide housing 105 that receives the first guide housing 104.

The lens housing 103 is received in the first guide housing 104 to move straight along the optical axis of the image sensor 191 so that the lens 131 coincides with the optical axis of the image sensor 191. According to particular products, the lens housing 103 contains one or more lens assemblies 102. A pair of lens housing 103 is received in the lens assembly 102 of the camera lens assembly 100 according to the embodiment of the present invention. This enables it to move straight in the first guide housing 104 separately. Each lens housing 103 contains at least one lens 131.

The first guide housing 104 has a cylindrical shape, which extends in the direction of the optical axis of the image sensor 191. The first guide housing 104 has a first guide groove 141 that is formed by cutting off a part of the first guide housing 104 through a whole length. The first guide groove 141 extends in the direction of the optical axis of the image sensor 191. The first guide groove 141 enables guiding a straight movement of the lens housings 103, which has a guide projection 133 corresponding to the first guide groove 141 on the outer peripheral surface of the lens housing 103. The guide projection 133 has an end projected through the first guide groove 141 out of the first guide housing 104. The guide projection 133 is able to move only in the first guide groove 141. The lens housing 103 can move straight in the direction of the optical axis of the image sensor 191 in the first guide housing 104.

The second guide housing 105 receives the first guide housing 104 while arranged in the optical axis of the image sensor to enable rotation. That is, the second guide housing 105 rotates around the optical axis of the image sensor 191 while enclosing the first guide housing 104. The second guide housing 105 includes a control grip 153, which encloses the outer peripheral surface of the second guide housing 105. The control grip 153 is exposed out of the hinge assembling portion 31 of the portable terminal 10, so that a user can use it for rotating the second guide housing 105 as needed. Second guide grooves 151 are formed on the inner periphery surface of the second guide housing 105. The second guide grooves 151 are formed using enough numbers to correspond to the lens housings 103. The respective guide groove 151 receives the end of each guide projection 133 that is projected out of the outer peripheral surface of the first guide housing 104.

The second guide grooves 151 respectively extend along an incline trace with respect to the optical axis of the image sensor. One of the second guide grooves 151 forms a V-shaped trace. The other has an end adjacent to one end of the trace of the second guide groove having a V shape and the other end remote from the other end of the trace of the second guide groove to establish an incline trace.

The guide projections 133 extend through the first guide groove 141 so as to be respectively engaged with each second guide groove 151. Therefore, the lens housings 103 are respectively placed at a position that the first guide groove 141 intersects the second guide groove 151. When the second guide grooves 151 are in regions close to each other, the lens housings 103 are adjacent to each other. When the second guide grooves 151 are in regions far from each other, the lens housings 103 are remotely spaced from each other. Thereby, the lens assembly 102 can perform the zoom-in and zoom-out functions.

As noted, the optical axis of the image sensor 191 is coaxial with the hinge axis A of the portable terminal 10. That is, the image sensor 191 is arranged to photograph the subject in a direction to the housing of the portable terminal 10, particularly a side of the first housing 11.

Meanwhile, the camera lens assembly 100 is provided with the prism 106 in order to photograph the subject in different directions.

The prism 106 is arranged in the optical axis of the image sensor 191 to introduce the image for the subject, which is positioned at a direction B normal to the optical axis of the image sensor 191, into the image sensor 191. The image is introduced into the prism 106 through a window 33 for exposure that is formed in the hinge assembling portion 31 of the portable terminal 10. The prism 106 transfers the introduced image to the direction of the optical axis of the image sensor 191.

The prism 106 can rotate around the hinge axis A along with the window 33 for exposure (not shown). Referring back to FIG 1, the window 33 for exposure faces a front surface of the first housing 11. At this time, the user takes a picture of himself or herself while viewing his or her appearance through the display unit 25.

When the prism 106 rotates around the hinge axis A (i.e. the optical axis of the image sensor 191) along with the window 33 for exposure, the photographing direction B of the camera lens assembly 100 also is changed into a direction that the prism rotates around the optical axis of the image sensor 191. Thus, the user can take a picture of the subject at the rear of the housing 11.

Advantageously, as described above, the camera lens assembly for use with portable terminals according to the present invention has a driving motor and an image sensor that are disposed in the direction of the optical axis. This enables the camera lens assembly to be easily mounted in the already existing/obtained space of the portable terminal. Furthermore, since the lens assembly performing the optical zoom function is disposed in the optical axis of the image sensor according to particular product designs, it is possible to contain the camera lens assembly in the obtained space of the portable terminal. As a result, the portable terminal can have the optical zoom function without the increasing the size of the portable terminal. In addition, it is possible to take a picture of various angles of the subject even if the portable terminal faces a set direction. This is because the prism can rotate around the optical axis of the image sensor.

While the invention has been shown and described with reference to certain preferred embodiments thereof, it will be understood by those skilled in the art that various changes in form and details may be made therein without departing from the scope of the invention as defined by the appended claims. In the preferred embodiment of the present invention, for example, it is described that the camera lens assembly 100 is disposed in the hinge axis A. However, it is possible that the camera lens assembly can be mounted to any portable terminal, such as a bar, flip and sliding-type portable terminals, etc. In those cases, the optical axis of the image sensor can be arranged in a transverse or longitudinal direction of any housing constructing the portable terminal, so that the photographing can be performed at the various directions by using the prism 191. Also, it is possible to obtain the space in that the lens assembly is mounted according to the particular product design.

## Claims

1. A camera lens assembly (100) for use with a portable terminal (10), comprising:
a guide plate (197) having an image sensor (191) on the surface thereof;
a driving motor (101) placed on the other surface of the guide plate (197), and
a driving shaft (199) which extends along an optical axis, A, of the image sensor (191) from the other surface of the guide plate, wherein the driving shaft is movable by said driving motor along the optical axis, A, of the image sensor to enable the guide plate and the image sensor to move forward or backward along the optical axis.

2. The camera lens assembly according to claim 1, wherein the driving motor (101) is adapted to control focus when the operated.

3. The camera lens assembly according to claims 1 or 2, wherein the driving motor (101) comprises:
a housing (111);
a stator (113) disposed in the housing (111), and
a rotor (115) received in the housing to be rotated according to signal current applied to the stator (113),
wherein the driving shaft (199) is coupled with the rotor (115) so as to move forward and backward along the optical axis, A, of the image sensor (191) when the rotor (115) rotates.

4. The camera lens assembly according to claim 3, wherein the driving shaft (199) is screw-assembled with the rotor (115).

5. The camera lens assembly according to claims 3 or 4, further comprising a guide shaft (198) which extends from the housing (111) to penetrate the guide plate (197), wherein a rotation movement of the rotor (115) is transformed into a linear movement of the driving shaft (199) since rotations of the guide plate and the driving shaft are restrained by the guide shaft extending through and assembled with the guide plate (197).

6. The camera lens assembly according to one of the previous claims, further comprising a lens assembly (102) including at least one lens (131) which is placed in a front of the image sensor (191) and is arranged in the optical axis, A, of the image sensor.

7. The camera lens assembly according to claim 6, wherein the lens assembly (102) comprises:
at least one lens housing (103) receiving the lens;
a first guide housing (104) to receive the lens housing (103) and extending along the optical axis, A, of the image sensor (191); and
a second guide housing (105) to receive the first guide housing (104) and to be rotatable around the optical axis of the image sensor.

8. The camera lens assembly according to claim 7, wherein the first guide housing (104) has a cylindrical shape.

9. The camera lens assembly according to claims 6 or 7, wherein the lens housing (103) has a guide projection (133) on an outer peripheral surface thereof;
the first guide housing (104) has a first guide groove (141) which is formed along the optical axis, A, of the image sensor (191) with said guide projection (133) projecting out of the outer peripheral surface of the first guide housing;
the second guide housing (105) has second guide grooves (151) which are on an inner peripheral surface of the second guide housing and are inclined with respect to the first guide groove (141), and
the lens housing (103) is adapted to move forward or backward along the optical axis, A, of the image sensor (191) to perform a zoom-in or zoom-out function as the second guide housing (105) rotates with the guide projection (133) slidably received in the second guide groove (151).

10. The camera lens assembly according to one of the previous claims, wherein the image sensor (191) further includes a prism (106) disposed in the optical axis, A, of the image sensor and of which an optical axis is arranged in a direction to a side of the housing of the portable terminal to enable the image sensor to take a picture of the subject at a position normal to the optical axis, A.

11. The camera lens assembly according to claim 10, wherein the prism (106) is rotatable about the optical axis, A, of the image sensor (191) to take a picture of any subject placed in the front or behind of the housing of the portable terminal.

12. The camera lens assembly according to one of the previous claims, further comprising an ultraviolet filter (195) attached to the image sensor (191).

13. The camera lens assembly according to one of the previous claims, further comprising a contact sensor (192) provided adjacent to a rear surface of the housing (111), wherein an end of the driving shaft (199), when the photographing is completed, is moved to a position at which it contacts with the contact sensor (192).

14. A portable terminal (10) with a camera lens assembly (100) according to one of the previous claims, wherein the portable terminal (10) includes a first housing (11) and a second housing (21) coupled with each other and the image sensor (191) is disposed on a coupling axis between the first housing and the second housing.

15. The portable terminal according to claim 14, wherein the first housing (11) and the second housing (21) are hingedly coupled with each other.

16. The portable terminal according to claim 14 or 15, wherein the optical axis, A, of the image sensor (121) coincides with the coupling axis of the two housings (11, 21) of the portable terminal (10).
